# EUROPÄISCHE PATENTSCHRIFT

(11) **EP 1 893 886 B1**
(45) Veröffentlichungstag und Bekanntmachung des Hinweises auf die Patenterteilung: **24.06.2009**
(21) Anmeldenummer: 05810673.3
(22) Anmeldetag: 02.11.2005
(51) Int. Cl.: F16F 1/52, B63H 21/30

(54) **LAGER FÜR GROSSMOTOREN, INSBESONDERE MARITIMES MOTORLAGER**
MOUNT FOR LARGE ENGINES, ESPECIALLY A MARITIME ENGINE MOUNT
PALIER POUR GROS MOTEURS, NOTAMMENT PALIER DE MOTEUR MARITIME

(30) Priorität: 15.06.2005 DE 102005620200
(43) Veröffentlichungstag der Anmeldung: 05.03.2008
(73) Patentinhaber: ContiTech Vibration Control GmbH, 30165 Hannover (DE)
(72) Erfinder: KRAUSE, Curt, 21033 Hamburg (DE); DORNER, Andreas, 21035 Hamburg (DE); ECKWERTH, Peter, 22885 Barsbüttel (DE); MEYER, Rüdiger, 21385 Amelinghausen (DE)
(74) Vertreter: Finger, Karsten
(86) Internationale Anmeldenummer: PCT/DE2005/001955
(87) Internationale Veröffentlichungsnummer: WO 2006/133660

(56) Entgegenhaltungen:
- WO-A-20/05036015
- DE-B- 1 206 214
- FR-A- 1 449 356
- NL-C- 1 013 421
- US-A- 2 215 743
- US-A- 2 642 252
- [Online] XP002372701 Gefunden im Internet: URL:http://www.trelleborg.com/industrialav s/images/products/Cushyfloat.pdf> [gefunden am 2006-03-16]
- "MARINE VIBRATIONS LIMITED BY NEW MOUNT" SHIP AND BOAT INTERNATIONAL, ROYAL INSTITUTION OF NAVAL ARCHITECTS, LONDON, GB, Nr. 10, Dezember 2001 (2001-12), Seite 14, XP001112088 ISSN: 0037-3834

## Beschreibung

Die Erfindung betrifft ein Lager für Großmotoren, die in Motorlängsrichtung Schubkräften F ausgesetzt sind, insbesondere maritimes Motorlager, mit einer Lagerlängsrichtung X, Lagerquerrichtung Y und Lagerhochrichtung Z, bestehend wenigstens aus:
- einem Lageroberteil mit einer Längsmittenebene C1 und Quermittenebene C2, das mit einer Anbindung an den Motor versehen ist;
- einem Lagerunterteil mit Anbindung an das Fundament, insbesondere in Form einer Befestigungsplatte; sowie
- einem Polster aus elastomerem Werkstoff, das zwischen dem Lageroberteil und Lagerunterteil angeordnet ist.

Hinsichtlich weiterer Merkmale des gattungsgemäßen Lagers wird auf den Oberbegriff des Patentanspruches 1 verwiesen. Derartige Lager werden auch als Maschinenfüße bezeichnet, wobei hinsichtlich des diesbezüglichen Standes der Technik insbesondere auf folgende Druckschriften verwiesen wird:
(1) [Online] XP002372701, gefunden im Internet:
   URL:http://www.trelleborg.com/industrialav s/images/products/Cushyfloat.pdf.
(2) DE 1 114 062 B
(3) DE 1 206 214 B
(4) EP 0 839 292 A1
(5) GB 2 086 530 A
(6) US 5 265 552

Im maritimen Bereich, was hier eine Schwerpunktthematik ist, sind die Großmotoren über einen Antrieb mit der Schiffsschraube verbunden, was dazu führt, dass in Motorlängsrichtung Schubkräfte (Propellerschubkräfte) wirken. Dies wiederum stellt hohe Anforderungen an das Motorlager. Unter diesem Aspekt bildet die Lagerkonstruktion gemäß der Druckschrift (1) den nächst liegenden Stand der Technik.

Im Rahmen einer Weiterentwicklung besteht die Aufgabe der Erfindung darin, für ein Motorlager der gattungsgemäßen Art Maßnahmen zu treffen, wonach das Lager ohne Beschädigung angeliefert werden kann, verbunden mit einer sicheren Montage, so dass ein ruhiger Lauf des Motorlagers bei gleichzeitiger Übertragung von Vertikalkräften und Schubkräften gewährleistet ist.

Gelöst wird diese Aufgabe gemäß Kennzeichen des Patentanspruches 1 dadurch, dass
- das Lageroberteil innerhalb seines dem Lagerunterteil zugewandten Bereiches eine flanschförmige Verbreiterung aufweist; sowie
- das Lager mit einer Transportsicherung versehen ist, die zugleich zur Vorsetzung des Lagers dient, wobei die Transportsicherung so gestaltet ist, dass innerhalb der flanschförmigen Verbreiterung des Lageroberteiles (5) zwei Bohrungen vorhanden sind, die zur Verschraubung mit dem Lageroberteil dienen, wobei sich zwischen der flanschförmigen Verbreiterung und dem Lagerunterteil jeweils eine Distanzhülse befindet, wobei ferner die zwei Bohrungen so angeordnet sind, dass zwei Eckbereiche der flanschförmigen Verbreiterung des Lageroberteiles mit den Bohrungen versehen sind, wobei die Bohrungen zusammen mit dem zentral angeordneten Kern eine Diagonalmittenebene C3 bilden.

Zweckmäßige Ausgestaltungen des Motorlagers sind in den Patentansprüchen 2 bis 29 genannt.

Die Erfindung wird nun anhand von Ausführungsbeispielen unter Bezugnahme auf schematische Zeichnungen erläutert. Es zeigen:
- Fig. 1: einen Großmotor mit Antrieb für die Schiffsschraube;
- Fig. 2: ein Motorlager in den drei Raumkoordinaten X, Y und Z sowie den Verlauf der Längsmittenebene C1 und Quermittenebene C2;
- Fig. 3: einen Schnitt des Motorlagers gemäß Fig. 2 in Lagerlängsrichtung X bzw. durch die Längsmittenebene C1;
- Fig. 4: einen Schnitt des Motorlagers in Lagerquerrichtung Y im Bereich der Polstersegmente A bzw. B;
- Fig. 5: eine Detailansicht des Kerns für den Anschlag;
- Fig. 6: ein Motorlager gemäß Fig. 2 zwecks zusätzlicher Erklärung von Lagerbauteilen.

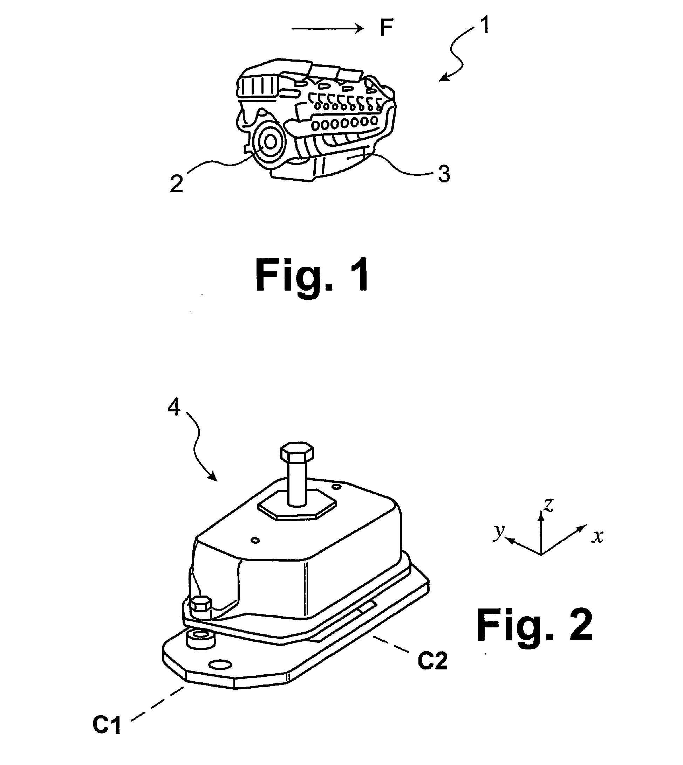

Fig. 1 zeigt einen Großmotor 1 mit Antrieb 2 für die Schiffsschraube, wodurch in Motorlängsrichtung eine Schubkraft F wirkt. Der Großmotor besitzt einen schmalen Unterbau 3, so dass für die Motorlager nur ein relativ geringer Bauraum zur Verfügung steht.

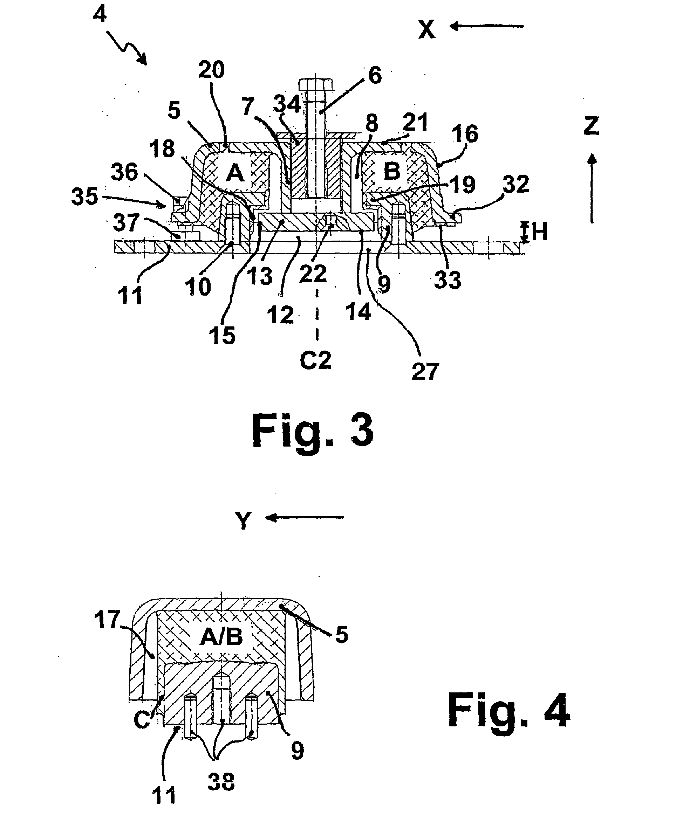

Fig. 2 zeigt nun das Motorlager **4** in den drei Raumkoordinaten X, Y und Z sowie den Verlauf der Längsmittenebene C1 und Quermittenebene C2, wobei die Lagerlängsrichtung X zugleich die Motorlängsrichtung (Richtung der Schubkraft F; Fig. 1) ist. Konstruktive Details dieses Lagers werden in den Fig. 3 bis 6 vorgestellt.

Nach Fig. 3 besitzt das Motorlager **4** ein Lageroberteil **5,** das glockenförmig ausgebildet ist. Dadurch wird das Lagerinnere vor herabtropfendem Öl geschützt. Das Lageroberteil weist dabei in Lagerlängsrichtung X eine größere Erstreckungsdimension auf als in Lagerquerrichtung Y (Fig. 2). Durch diesen schmalen Bau ist das Lager im Hintergrund des oben geschilderten geringen Baurraumes optimal einsetzbar.

Die Anbindung **6** an den Motor umfasst einen zentral angeordneten Kern **7** im Bereich der Schnittlinie von Längsmittenebene C1 (Fig. 2) und Quermittenebene C2, wobei der Kern einen einstückigen Verbund mit dem Lageroberteil **5** bildet und in Lagerhochrichtung Z in das Lagerinnere gerichtet ist. Die Anbindung erfolgt dabei mittels eines Verschraubungssystems, das in einer Kernfassung integriert ist.

Das Polster aus elastomerem Werkstoff bildet ausschließlich mit dem Lageroberteil **5** einen Haftverbund (im Sinne einer Nichtverschraubung), insbesondere durch Vulkanisation, und ist dabei in Bezug auf die Quermittenebene C2 aufgeteilt in ein erstes Polstersegment A und ein zweites Polstersegment B, wobei zwischen jedem Polstersegment und dem zentralen Kern **7** eine Luftkammer **8** vorhanden ist.

In das erste und zweite Polstersegment A und B ist jeweils haftend ein Verankerungselement **9** integriert, das wiederum jeweils mit einer Bohrung versehen ist, und zwar zwecks Verschraubung **10** mit dem Lagerunterteil **11,** wobei in Lagerhochrichtung Z zwischen dem Lageroberteil und Lagerunterteil ein Federweg H gebildet wird.

Im Lagerinneren ist innerhalb einer weiteren Luftkammer **12,** die mit der Luftkammer **8** ein Gesamtkammersystem bildet, ein plattenförmiger Anschlag **13** vorhanden, der mit dem Kernende fest verbunden ist, wobei der Anschlag einen Bodenbereich **14** und zwei Seitenbereiche **15** umfasst. In vertikaler Druckrichtung erfolgt der Anschlag über das Lageroberteil **5** mittels seines Bodenbereiches auf das Lagerunterteil **11.** In Lagerlängsrichtung erfolgt der Anschlag über das Lageroberteil mittels seiner beiden Seitenbereiche auf das jeweilige Polstersegment A bzw. B. Der Horizontalanschlag greift dabei erst bei Extremlasten. Dieser Anschlag verändert das positive Schwingungsverhalten gegenüber der reinen Vertikalbelastung nicht negativ, im Gegensatz zu den bisher bekannten inneren Anschlagkonstellationen, die den Weg in Horizontalrichtung begrenzen.

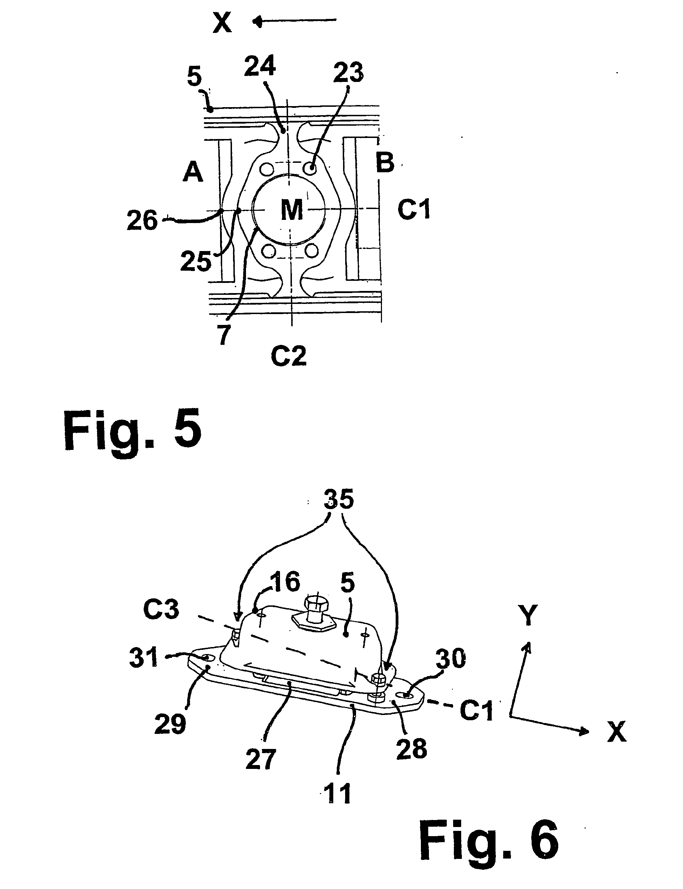

Ausgehend von diesem Grundaufbau des Motorlagers **4** sind folgende konstruktive Maßnahmen von Vorteil:
- Die beiden Polstersegmente A und B, die in Bezug zueinander vollständig isolierte elastische Bauteile sind, füllen in Lagerlängsrichtung X zwischen den jeweiligen Luftkammern **8** und dem jeweiligen Lageroberteilende **16** sowie in Lagerhochrichtung Z vollständig die glockenförmige Innenkontur des Lageroberteiles aus (Fig. 3).
- Die beiden Polstersegmente A und B reichen in Lagerquerrichtung Y unter Ausbildung eines beidseitigen Freiraumes **17** nicht bis an die glockenförmige Innenkontur des Lageroberteiles **5** heran (Fig. 4).
- Die beiden Polstersegmente A und B sind ferner derart gestaltet, dass das jeweilige Verankerungselement **9** vollständig von elastomerem Werkstoff umgeben ist, so dass der jeweilige Seitenbereich **15** des Anschlages **13** eine elastische Pufferung **18** erfährt (Fig. 3).
- Das Verankerungselement **9** weist innerhalb der beiden Polstersegmente A und B einen Hocker **19** auf, der oberhalb des Anschlages **13** in Richtung Kern **7** verläuft. Hiermit kann man die Steifigkeit des Lagers kostengünstig beeinflussen, verbunden mit einem breiten Anwendungsspektrum. Es ist dabei ausreichend, wenn insgesamt zwei Verankerungselemente vorhanden sind, die spiegelsymmetrisch zur Quermittenebene C2 (Fig. 3) angeordnet sind und dabei fast über die gesamte Breite der Polstersegmente verlaufen, und zwar unter vollständiger Einbettung C in elastomerem Werkstoff (Fig. 4). Im Rahmen des Ausführungsbeispieles gemäß Fig. 4 beträgt die Breite eines Verankerungselementes etwa 90 % der Gesamtbreite eines Polstersegmentes. Eine Dreifachverschraubung **38** sorgt hier für eine sichere Anbindung des Lageroberteiles **5** an das Lagerunterteil **11.**
- Das Lageroberteil **5** weist Bohrungen **20** auf, in die der elastomere Werkstoff der beiden Polstersegmente A und B eindringt. Die Bohrungen sind dabei innerhalb des Kopfteiles **21** des Lageroberteiles angeordnet. Es ist dabei ausreichend, wenn insgesamt zwei Bohrungen vorhanden sind, die innerhalb der Längsmittenebene C1 (Fig. 2) angeordnet sind, und zwar spiegelsymmetrisch zur Quermittenebene C2 (Fig. 2, Fig. 3).
- Der Anschlag **13** ist eine im Wesentlichen rechteckige Platte. Die Befestigung mit dem Kern **7** erfolgt dabei mittels zwei bis vier Schrauben **22,** wobei dann der Kern zwei bis vier korrespondierende Bohrungen **23** besitzt. Dabei sind zwei Schrauben bzw. Bohrungen ausreichend, die in Bezug auf den Kernmittelpunkt M symmetrisch angeordnet sind. Alternativ hierzu sind vier Schrauben bzw. Bohrungen vorhanden, die spiegelsymmetrisch zur Längsmittenebene C1 und Quermittenebene C2 angeordnet sind (Fig. 3, Fig. 5).
- Der Kern **7** ist innerhalb der Quermittenebene C2 mit dem Lageroberteil **5** verbunden (Kernverbindung **24),** und zwar zwecks zusätzlicher Stabilisierung des Kerns. Der Kern selbst ist konturiert, und zwar unter Ausbildung einer beidseitigen Kernerweiterung **25** in Lagerlängsrichtung X, wobei die beiden Polstersegmente A und B eine korrespondierende Polstervertiefung **26** aufweisen. Die Wandstärke der Kernverbindung ist kleiner als der maximale Kerndurchmesser im Bereich der Kernerweiterung (Fig. 5).
- Der Kern **7** und/oder andere polsterfreie Innenflächen des Lageroberteiles **5** kann/können zwecks Korrosionsschutzes mit einer Schicht aus elastomerem Werkstoff oder Kunststoff versehen sein. Eine derartige Beschichtungsmaßnahme kann auch für den Bodenbereich **14** und/oder die beiden Seitenbereiche **15** des Anschlages **13** vorgenommen werden, wobei hier insbesondere eine zusätzliche Pufferung erzielt werden kann.
- Das Lagerunterteil **11,** das als Befestigungsplatte ausgebildet ist, weist im Wirkbereich des Bodenbereiches **14** des Anschlages **13** eine Aussparung **27** auf, die in vertikaler Druckrichtung den Federweg des Lagers vergrößert (Fig. 3, Fig. 6).
- Das Lagerunterteil **11** weist wie auch das Lageroberteil **5** in Lagerlängsrichtung X eine größere Erstreckungsdimension auf als in Lagerquerrichtung Y. In Bezug auf die beiden Lageroberteilenden **16** ist dabei ein erster Überstand **28** und zweiter Überstand **29** vorhanden. Innerhalb dieser beiden Überstände ist jeweils eine Bohrung für die Verschraubung vorhanden, wobei die beiden Bohrungen in Form von Langlöchern innerhalb der Längsmittenebene C1 angeordnet sind. Das erste Langloch **30** besitzt seine Haupterstreckungsrichtung in Lagerlängsrichtung X. Das zweite Langloch **31** hat dagegen seine Haupterstreckungsrichtung in Lagerquerrichtung Y, was eine optimale Fundamentbefestigung des Motorlagers bewirkt (Fig. 6).
- Die flanschförmige Verbreiterung **32** ist umlaufend. Diese Verbreiterung ist mit einer Elastomerschicht **33** versehen, die mit dem jeweiligen Polstersegment A bzw. B einen einstückigen Gesamtverbund bildet (Fig. 3).
- Die Anbindung **6** des Lageroberteiles **5** an den Motor ist mit einer Nivelliervorrichtung **34** zwecks Höhenverstellbarkeit des Motorlagers **4** ausgestattet (Fig. 3).

Das hier vorgestellte Motorlager, insbesondere in Verbindung mit den vorteilhaften Gestaltungsvarianten, kann in allen Richtungen Kräfte aufnehmen, die bis das 3-fache der Endbeschleunigung ausmachen. Es ist dabei vielseitig anwendbar.

Mit Ausnahme der Polstersegmente A und B sowie der Beschichtungen gemäß Patentansprüchen 15 und 29 bestehen die Bauteile des Motorlagers zumeist aus Metall.

Im Rahmen einer beispielhaften Ausführungsform hat das Motorlager folgende Abmessungen:

| | |
|---|---|
| Länge: | 335 mm |
| Breite: | 120 mm |
| Höhe: | 92 mm |

Es zeichnet sich also durch einen geringen Platzbedarf aus und ist aufgrund seiner niedrigen Eigenfrequenz bestens auch für niedrig drehende Motoren geeignet.

Das Motorlager ist mit einer Transportsicherung **35** (Fig. 3, Fig. 6) versehen, die zugleich zur Vorsetzung des Lagers dient. Die Transportsicherung ist dabei so gestaltet, dass innerhalb der flanschförmigen Verbreiterung **32** des Lageroberteiles **5** zwei Bohrungen vorhanden sind, die zur Verschraubung **36** dienen, wobei sich zwischen der flanschförmigen Verbreiterung und dem Lagerunterteil **11** jeweils eine Distanzhülse **37** befindet. Die zwei Bohrungen sind so angeordnet, dass zwei Eckbereiche der flanschförmigen Verbreiterung des Lageroberteiles mit den Bohrungen versehen sind, wobei diese zusammen mit dem zentral angeordneten Kern **7** (Fig. 3, Fig. 5) eine Diagonalmittenebene C3 bilden (Fig. 6). Im Hinblick auf die spätere Funktion des Motorlagers wird die Transportsicherung nach der Montage entfernt, so dass sich ein Federweg H bilden kann (Fig. 3).

### Bezugszeichenliste

- **1**: Großmotor
- **2**: Antrieb für Schiffsschraube
- **3**: Unterbau
- **4**: Motorlager, insbesondere maritimes Motorlager
- **5**: Lageroberteil
- **6**: Anbindung an den Motor
- **7**: zentral angeordneter Kern
- **8**: Luftkammer
- **9**: Verankerungselement
- **10**: Verschraubung
- **11**: Lagerunterteil
- **12**: Luftkammer
- **13**: plattenförmiger Anschlag
- **14**: Bodenbereich des Anschlages
- **15**: Seitenbereiche des Anschlages
- **16**: Lageroberteilende
- **17**: Freiraum
- **18**: Pufferung
- **19**: Hocker
- **20**: Bohrung
- **21**: Kopfteil des Lageroberteiles
- **22**: Schraube
- **23**: Bohrung
- **24**: Kernverbindung
- **25**: Kernerweiterung
- **26**: Polstervertiefung
- **27**: Aussparung
- **28**: erster Überstand
- **29**: zweiter Überstand
- **30**: erstes Langloch
- **31**: zweites Langloch
- **32**: flanschförmige Verbreiterung
- **33**: Elastomerschicht
- **34**: Nivelliervorrichtung
- **35**: Transportsicherung
- **36**: Verschraubung
- **37**: Distanzhülse
- **38**: Dreifachverschraubung
- A: erstes Polstersegment
- B: zweites Polstersegment
- C: Eiastomereinbettung
- C1: Längsmittenebene
- C2: Quermittenebene
- C3: Diagonalmittenebene
- F: Schubkraft in Motorlängsrichtung
- H: Federweg
- M: Kernmittelpunkt
- X: Lagerlängsrichtung
- Y: Lagerquerrichtung
- Z: Lagerhochrichtung

## Patentansprüche

1. Lager für Großmotoren (1), die in Motorlängsrichtung Schubkräften F ausgesetzt sind, insbesondere maritimes Motorlager (4), mit einer Lagerlängsrichtung X, Lagerquerrichtung Y und Lagerhochrichtung Z, bestehend wenigstens aus:
- einem Lageroberteil (5) mit einer Längsmittenebene C1 und Quermittenebene C2, das mit einer Anbindung (6) an den Motor versehen ist;
- einem Lagerunterteil (11) mit Anbindung an das Fundament, insbesondere in Form einer Befestigungsplatte; sowie
- einem Polster aus elastomerem Werkstoff, das zwischen dem Lageroberteil (5) und Lagerunterteil (11) angeordnet ist;
wobei
- das Lageroberteil (5) glockenförmig ausgebildet ist und dabei in Lagerlängsrichtung X, die zugleich die Motorlängsrichtung ist, eine größere Erstreckungsdimension aufweist als in Lagerquerrichtung Y;
- die Anbindung (6) an den Motor einen zentral angeordneten Kern (7) mit integriertem Verschraubungssystem umfasst, wobei der Kern einen Verbund mit dem Lageroberteil (5) bildet und in Lagerhochrichtung Z in das Lagerinnere gerichtet ist;
- das Polster ausschließlich mit dem Lageroberteil (5) einen Haftverbund bildet und dabei in Bezug auf die Quermittenebene C2 aufgeteilt ist in ein erstes und zweites Polstersegment (A, B), wobei zwischen jedem Polstersegment und dem zentralen Kern (7) eine Luftkammer (8) vorhanden ist;
- in das erste und zweite Polstersegment (A, B) jeweils haftend wenigstens ein Verankerungselement (9) integriert ist, das wiederum jeweils mit wenigstens einer Bohrung versehen ist, und zwar zwecks Verschraubung (10) mit dem Lagerunterteil (11), wobei in Lagerhochrichtung Z zwischen dem Lageroberteil und Lagerunterteil ein Federweg H gebildet wird; sowie
- im Lagerinneren innerhalb einer weiteren Luftkammer (12) ein plattenförmiger Anschlag (13) vorhanden ist, der mit dem Kernende fest verbunden ist, wobei der Anschlag einen Bodenbereich (14) und zwei Seitenbereiche (15) umfasst, wobei in vertikaler Druckrichtung der Anschlag über das Lageroberteil (5) mittels seines Bodenbereiches auf das Lagerunterteil (11) erfolgt, während in Lagerlängsrichtung X der Anschlag über das Lageroberteil mittels seiner beiden Seitenbereiche auf das jeweilige Polstersegment (A, B) erfolgt;
**dadurch gekennzeichnet, dass**
- das Lageroberteil (5) innerhalb seines dem Lagerunterteil (11) zugewandten Bereiches eine flanschförmige Verbreiterung (32) aufweist; sowie
- das Lager (1) mit einer Transportsicherung (35) versehen ist, die zugleich zur Vorsetzung des Lagers dient, wobei die Transportsicherung so gestaltet ist, dass innerhalb der flanschförmigen Verbreiterung (32) des Lageroberteiles (5) zwei Bohrungen vorhanden sind, die zur Verschraubung (36) mit dem Lageroberteil dienen, wobei sich zwischen der flanschförmigen Verbreiterung und dem Lagerunterteil (11) jeweils eine Distanzhülse (37) befindet, wobei ferner die zwei Bohrungen so angeordnet sind, dass zwei Eckbereiche der flanschförmigen Verbreiterung des Lageroberteiles mit den Bohrungen versehen sind, wobei die Bohrungen zusammen mit dem zentral angeordneten Kern (7) eine Diagonalmittenebene C3 bilden.

2. Lager nach Anspruch 1, **dadurch gekennzeichnet, dass** das erste und zweite Polstersegment (A, B) in Lagerquerrichtung Y unter Ausbildung eines beiseitigen Freiraumes (17) nicht bis an die glockenförmige Innenkontur des Lageroberteiles (5) reichen.

3. Lager nach Anspruch 1 oder 2, **dadurch gekennzeichnet, dass** das erste und zweite Polstersegment (A, B) in Lagerlängsrichtung X zwischen den jeweiligen Luftkammern (8) und dem jeweiligen Ende (16) des Lageroberteiles (5) sowie in Lagerhochrichtung Z vollständig die glockenförmige Innenkontur des Lageroberteiles ausfüllen.

4. Lager nach einem der Ansprüche 1 bis 3, **dadurch gekennzeichnet, dass** das erste und zweite Polstersegment (A, B) in Bezug zueinander vollständig isolierte elastische Bauteile sind.

5. Lager nach einem der Ansprüche 1 bis 4, **dadurch gekennzeichnet, dass** das erste und zweite Polstersegment (A, B) derart gestaltet sind, dass das jeweilige Verankerungselement (9) vollständig von elastomerem Werkstoff umgeben ist, so dass der jeweilige Seitenbereich (15) des Anschlages (13) eine elastische Pufferung (18) erfährt.

6. Lager nach einem der Ansprüche 1 bis 5, **dadurch gekennzeichnet, dass** das Verankerungselement (9) innerhalb des ersten und zweiten Polstersegmentes (A, B) einen Hocker (19) aufweist, der oberhalb des Anschlages (13) in Richtung Kern (7) verläuft.

7. Lager nach einem der Ansprüche 1 bis 6, **dadurch gekennzeichnet, dass** insgesamt zwei Verankerungselemente (9) vorhanden sind, die spiegelsymmetrisch zur Quermittenebene C2 angeordnet sind und dabei insbesondere fast über die gesamte Breite der Polstersegmente (A, B) verlaufen, und zwar unter vollständiger Einbettung (C) in elastomerem Werkstoff.

8. Lager nach einem der Ansprüche 1 bis 7, **dadurch gekennzeichnet, dass** das Lageroberteil (5) Bohrungen (20) aufweist, in die der elastomere Werkstoff des ersten und zweiten Polstersegmentes (A, B) eindringt.

9. Lager nach Anspruch 8, **dadurch gekennzeichnet, dass** die Bohrungen (20) innerhalb des Kopfteiles (21) des Lageroberteiles (5) angeordnet sind.

10. Lager nach Anspruch 9, **dadurch gekennzeichnet, dass** insgesamt zwei Bohrungen (20) vorhanden sind, die innerhalb der Längsmittenebene C1 angeordnet sind, und zwar spiegelsymmetrisch zur Quermittenebene C2.

11. Lager nach einem der Ansprüche 1 bis 10, **dadurch gekennzeichnet, dass** der Anschlag (13) eine im Wesentlichen rechteckige Platte ist.

12. Lager nach einem der Ansprüche 1 bis 11, **dadurch gekennzeichnet, dass** der Anschlag (13) mit dem Kern (7) verschraubt ist, insbesondere mittels zwei bis vier Schrauben (22), wobei der Kern zwei bis vier korrespondierende Bohrungen (23) besitzt.

13. Lager nach Anspruch 12, **dadurch gekennzeichnet, dass** zwei Schrauben (22) bzw. zwei Bohrungen (23) vorhanden sind, die in Bezug auf den Kernmittelpunkt M symmetrisch zueinander angeordnet sind.

14. Lager nach Anspruch 12, **dadurch gekennzeichnet, dass** vier Schrauben (22) bzw. Bohrungen (23) vorhanden sind, die spiegelsymmetrisch zur Längsmittenebene C1 und Quermittenebene C2 angeordnet sind.

15. Lager nach einem der Ansprüche 1 bis 14, **dadurch gekennzeichnet, dass** der Bodenbereich (14) und/oder die beiden Seitenbereiche (15) des Anschlages (13) mit elastomerem Werkstoff oder mit Kunststoff beschichtet sind.

16. Lager nach einem der Ansprüche 1 bis 15, **dadurch gekennzeichnet, dass** sämtliche Luftkammern (8, 12) im Bereich des Anschlages (13) und des Kerns (7) ein Gesamtkammersystem bilden.

17. Lager nach einem der Ansprüche 1 bis 16, **dadurch gekennzeichnet, dass** der Kern (7) innerhalb der Quermittenebene C2 mit dem Lageroberteil (5) verbunden ist, und zwar unter Ausbildung einer Kernverbindung (24), deren Wandstärke insbesondere kleiner ist als der maximale Kerndurchmesser.

18. Lager nach einem der Ansprüche 1 bis 17, **dadurch gekennzeichnet, dass** der Kern (7) konturiert ist, und zwar unter Ausbildung einer beidseitigen Kernerweiterung (25) in Lagerlängsrichtung X, wobei die Polstersegmente (A, B) vorzugsweise eine korrespondierende Polstervertiefung (26) aufweisen.

19. Lager nach einem der Ansprüche 1 bis 18, **dadurch gekennzeichnet, dass** der Kern (7) einen einstückigen Verbund mit dem Lageroberteil (5) bildet.

20. Lager nach einem der Ansprüche 1 bis 19, **dadurch gekennzeichnet, dass** das Lagerunterteil (11) im Wirkbereich des Bodenbereiches (14) des Anschlages (13) eine Aussparung (27) aufweist, die in vertikaler Druckrichtung den Federweg des Lagers vergrößert.

21. Lager nach einem der Ansprüche 1 bis 20, **dadurch gekennzeichnet, dass** das Lagerunterteil (11) in Lagerlängsrichtung X eine größere Erstreckungsdimension aufweist als in Lagerguerrichtung Y.

22. Lager nach Anspruch 21, **dadurch gekennzeichnet, dass** das Lagerunterteil (11) in Bezug auf die beiden Lageroberteilenden (16) einen ersten und zweiten Überstand (28, 29) für die Anbindung an das Fundament aufweist.

23. Lager nach Anspruch 22, **dadurch gekennzeichnet, dass** innerhalb des ersten und zweiten Überstandes (28, 29) jeweils eine Bohrung (30, 31) für die Verschraubung vorhanden ist, wobei die beiden Bohrungen innerhalb der Längsmittenebene C1 angeordnet sind.

24. Lager nach Anspruch 23, **dadurch gekennzeichnet, dass** die beiden Bohrungen (30, 31) als Langlöcher ausgebildet sind.

25. Lager nach Anspruch 24, **dadurch gekennzeichnet, dass** die beiden Langlöcher (30, 31) so ausgebildet sind, dass das erste Langloch (30) seine Haupterstreckungsrichtung in Lagerlängsrichtung X und das zweite Langloch (31) seine Haupterstreckungsrichtung in Lagerquerrichtung Y besitzt.

26. Lager nach einem der Ansprüche 1 bis 25, **dadurch gekennzeichnet, dass** die Anbindung (6) des Lageroberteiles (5) an den Motor mit einer Nivelliervorrichtung (34) versehen ist.

27. Lager nach einem der Ansprüche 1 bis 26, **dadurch gekennzeichnet, dass** die flanschförmige Verbreiterung (32) umlaufend ist.

28. Lager nach einem der Ansprüche 1 bis 27, **dadurch gekennzeichnet, dass** die Unterseite der flanschförmigen Verbreiterung (32) mit einer Elastomerschicht (33) versehen ist, wobei die Elastomerschicht in Verbindung mit Anspruch 3 mit dem jeweiligen Polstersegment (A, B) einer einstückigen Gesamtelastomerverbund bildet.

29. Lager nach einem der Ansprüche 1 bis 28, **dadurch gekennzeichnet, dass** der Kern (7) und/oder andere polsterfreie Innenflächen des Lageroberteiles (5) mit einer Schicht aus elastomerem Werkstoff oder Kunststoff versehen ist/sind.

## Claims

1. Mount for large engines (1) which are subjected to thrust forces F in the longitudinal direction of the engine, in particular marine engine mount (4) with a longitudinal mount direction X, a transverse mount direction Y and a vertical mount direction Z, consisting at least of:
- an upper mount part (5) with a longitudinal central plane C1 and transverse central plane C2, which is provided with a connection (6) to the engine;
- a lower mount part (11) with a connection to the substructure, in particular in the form of a fastening plate; as well as
- a padding element made of elastomeric material, which is arranged between the upper mount part (5) and lower mount part (11);
- the upper mount part (5) being configured in the shape of a bell and thus in the longitudinal mount direction X, which is at the same time the longitudinal direction of the engine, having a greater dimension than in the transverse mount direction Y;
- the connection (6) to the engine comprising a centrally arranged core (7) with an integrated screwing system, the core forming a composite with the upper mount part (5) and being oriented inside the mount in the vertical mount direction Z;
- the padding element exclusively forming with the upper mount part (5) an adhesive composite, and thus being divided relative to the transverse central plane C2 into a first and second padding segment (A, B), and an air chamber (8) being present between each padding segment and the central core (7);
- at least one anchoring element (9) being adhesively incorporated respectively in the first and second padding segment (A, B), which in turn is provided respectively with at least one bore, and namely for the purpose of a screw connection (10) with the lower mount part (11), a spring path H being formed in the vertical mount direction Z between the upper mount part and the lower mount part; and
- inside the mount a plate-shaped abutment (13) being present inside a further air chamber (12), which is fixedly connected to the core end, the abutment comprising a base region (14) and two side regions (15), in the vertical compression direction the upper mount part (5) abutting against the lower mount part (11) by means of the bottom region thereof, whilst in the longitudinal mount direction X the upper mount part abutting against the respective padding segment (A, B) by means of the two lateral regions thereof;
**characterized in that**
- the upper mount part (5) has a flange-shaped widened portion (32) within its region facing the lower mount part (11); and
- the mount (1) is provided with a transport securing means (35) which at the same time serves for moving the mount forward, the transport securing means being designed such that inside the flange-shaped widened portion (32) of the upper mount part (5) two bores are present which serve for screwing (36) to the upper mount part, one respective spacer sleeve (37) being located between the flange-shaped widened portion and the lower mount part (11) and, moreover, the two bores being arranged such that two corner regions of the flange-shaped widened portion of the upper mount part are provided with the bores, the bores together with the centrally arranged core (7) forming a diagonal central plane C3.

2. Mount according to Claim 1, **characterized in that** the first and second padding segments (A, B) in the transverse mount direction Y, forming a clearance (17) on both sides, do not extend as far as the bell-shaped inner contour of the upper mount part (5).

3. Mount according to Claim 1 or 2, **characterized in that** the first and second padding segments (A, B) in the longitudinal mount direction X between the respective air chambers (8) and the respective end (16) of the upper mount part (5), as well as in the vertical mount direction Z, completely fill the bell-shaped inner contour of the upper mount part.

4. Mount according to one of Claims 1 to 3, **characterized in that** the first and second padding segments (A, B) are resilient components which are entirely separate from one another.

5. Mount according to one of Claims 1 to 4, **characterized in that** the first and second padding segments (A, B) are designed such that the respective anchoring element (9) is entirely surrounded by elastomeric material, so that the respective side region (15) of the abutment (13) is subjected to resilient buffering (18).

6. Mount according to one of Claims 1 to 5, **characterized in that** the anchoring element (9) within the first and second padding segments (A, B) comprises a protuberance (19) which extends over the abutment (13) in the direction of the core (7).

7. Mount according to one of Claims 1 to 6, **characterized in that** in total two anchoring elements (9) are present which are arranged mirror-symmetrically to the transverse central plane C2 and thus, in particular, extend over almost the entire width of the padding segments (A, B), and namely being entirely embedded (C) in elastomeric material.

8. Mount according to one of Claims 1 to 7, **characterized in that** the upper mount part (5) comprises bores (20), into which the elastomeric material of the first and second padding segments (A, B) penetrates.

9. Mount according to Claim 8, **characterized in that** the bores (20) are arranged within the top part (21) of the upper mount part (5).

10. Mount according to Claim 9, **characterized in that** in total two bores (20) are present which are arranged within the longitudinal central plane C1, and namely mirror-symmetrically to the transverse central plane C2.

11. Mount according to one of Claims 1 to 10, **characterized in that** the abutment (13) is a substantially rectangular plate.

12. Mount according to one of Claims 1 to 11, **characterized in that** the abutment (13) is screwed to the core (7), in particular by means of two to four screws (22), the core having two to four corresponding bores (23).

13. Mount according to Claim 12, **characterized in that** two screws (22) and/or two bores (23) are present, which are arranged symmetrically to one another relative to the central point of the core M.

14. Mount according to Claim 12, **characterized in that** four screws (22) and/or bores (23) are present which are arranged mirror-symmetrically to the longitudinal central plane C1 and the transverse central plane C2.

15. Mount according to one of Claims 1 to 14, **characterized in that** the bottom region (14) and/or the two side regions (15) of the abutment (13) are coated with elastomeric material or with plastics.

16. Mount according to one of Claims 1 to 15, **characterized in that** all air chambers (8, 12) in the region of the abutment (13) and the core (7) form a complete chamber system.

17. Mount according to one of Claims 1 to 16, **characterized in that** within the transverse central plane C2 the core (7) is connected to the upper mount part (5), and namely by the formation of a core connection (24), the wall thickness thereof, in particular, being smaller than the maximum core diameter.

18. Mount according to one of Claims 1 to 17, **characterized in that** the core (7) is contoured, and namely by the formation of a widened portion of the core (25) on both sides in the longitudinal mount direction X, the padding segments (A, B) preferably comprising a corresponding padding recess (26).

19. Mount according to one of Claims 1 to 18, **characterized in that** the core (7) forms an integral composite with the upper mount part (5).

20. Mount according to one of the Claims 1 to 19, **characterized in that** the lower mount part (11) in the effective region of the bottom region (14) of the abutment (13) comprises a recess (27) which in the vertical compression direction increases the spring path of the mount.

21. Mount according to one of Claims 1 to 20, **characterized in that** in the longitudinal mount direction X, the lower mount part (11) has a greater dimension than in the transverse mount direction Y.

22. Mount according to Claim 21, **characterized in that** the lower mount part (11) relative to the two upper mount part ends (16) comprises a first and second projection (28, 29) for connecting to the substructure.

23. Mount according to Claim 22, **characterized in that** within the first and second projection (28, 29) one respective bore (30, 31) is present for the screw connection, the two bores being arranged inside the longitudinal central plane C1.

24. Mount according to Claim 23, **characterized in that** the two bores (30, 31) are configured as slots.

25. Mount according to Claim 24, **characterized in that** the two slots (30, 31) are configured such that the first slot (30) has its principal direction of extension in the longitudinal mount direction X and the second slot (31) has its principal direction of extension in the transverse mount direction Y.

26. Mount according to one of Claims 1 to 25, **characterized in that** the connection (6) of the upper mount part (5) to the engine is provided with a levelling device (34).

27. Mount according to one of Claims 1 to 26, **characterized in that** the flange-shaped widened portion (32) is peripheral.

28. Mount according to one of Claims 1 to 27, **characterized in that** the underside of the flange-shaped widened portion (32) is provided with an elastomeric layer (33), the elastomeric layer forming, in combination with Claim 3, an integral elastomeric composite with the respective padding segment (A, B).

29. Mount according to one of Claims 1 to 28, **characterized in that** the core (7) and/or the other padding-free inner faces of the upper mount part (5) is/are provided with a layer made of elastomeric material or plastics.

## Revendications

1. Palier (1) pour gros moteurs, qui sont exposés à des forces de poussées F dans la direction longitudinale du moteur, en particulier palier pour moteurs maritimes (4), comprenant une direction longitudinale de palier X, une direction transversale de palier Y et une direction verticale de palier Z, constitué au moins des éléments suivants :
- une partie supérieure de palier (5) avec un plan médian longitudinal C1 et un plan médian transversal C2, qui est pourvu d'une liaison (6) au moteur ;
- une partie inférieure de palier (11) avec une liaison à la base, en particulier en forme de plaque de fixation ; et
- un rembourrage en matériau élastomère qui est disposé entre la partie supérieure de palier (5) et la partie inférieure de palier (11),
- la partie supérieure de palier (5) étant réalisée en forme de cloche et présentant ainsi dans la direction longitudinale de palier X, qui est en même temps la direction longitudinale du moteur, une plus grande étendue que dans la direction transversale de palier Y ;
- la liaison (6) au moteur comprenant un noyau (7) disposé centralement avec un système de vissage intégré, le noyau formant un assemblage avec la partie supérieure de palier (5) et étant orienté dans la direction verticale de palier Z à l'intérieur du palier ;
- le rembourrage formant un assemblage par adhésion exclusivement avec la partie supérieure de palier (5) et étant en l'occurrence divisé par rapport au plan médian transversal C2, en un premier et un deuxième segment de rembourrage (A, B), une chambre à air (8) étant prévue entre chaque segment de rembourrage et le noyau central (7),
- au moins un élément d'ancrage (9) étant intégré à chaque fois par adhésion dans le premier et le deuxième segment de rembourrage (A, B), et étant à son tour à chaque fois pourvu d'au moins un alésage, et ce afin de permettre le vissage (10) à la partie inférieure de palier (11), une course de ressort H étant formée dans la direction verticale de palier Z entre la partie supérieure de palier et la partie inférieure de palier ; et
- à l'intérieur du palier, dans une autre chambre à air (12), étant prévue une butée (13) en forme de plaque, qui est connectée fixement à l'extrémité de noyau, la butée comprenant une région de fond (14) et deux régions latérales (15), la butée ayant lieu par le biais de la partie supérieure de palier (5) au moyen de sa région de fond sur la partie inférieure de palier (11) dans la direction de pression verticale, tandis que dans la direction longitudinale de palier X, la butée a lieu par le biais de la partie supérieure de palier au moyen de ses deux régions latérales sur le segment de rembourrage respectif (A, B) ;
**caractérisé en ce que**
- la partie supérieure de palier (5) présente à l'intérieur de sa région tournée vers la partie inférieure de palier (11) un élargissement (32) en forme de bride ; et
- le palier (1) est pourvu d'une fixation pour le transport (35), qui sert en même temps à disposer en avant le palier, la fixation pour le transport étant configurée de telle sorte qu'à l'intérieur de l'élargissement (32) en forme de bride de la partie supérieure de palier (5), deux alésages soient prévus, lesquels servent au vissage (36) à la partie supérieure de palier, une douille d'espacement (37) étant située entre l'élargissement en forme de bride et la partie inférieure de palier (11), et en outre les deux alésages étant disposés de telle sorte que deux régions de coin de l'élargissement en forme de bride de la partie supérieure de palier soient pourvues des alésages, les alésages formant conjointement avec le noyau (7) disposé centralement un plan médian diagonal C3.

2. Palier selon la revendication 1, **caractérisé en ce que** le premier et le deuxième segment de rembourrage (A, B) ne s'étendent pas jusqu'au contour interne en forme de cloche de la partie supérieure de palier (5) dans la direction transversale de palier Y, en formant un espace libre (17) des deux côtés.

3. Palier selon la revendication 1 ou 2, **caractérisé en ce que** le premier et le deuxième segment de rembourrage (A, B) remplissent complètement le contour interne en forme de cloche de la partie supérieure de palier dans la direction longitudinale de palier X entre les chambres à air respectives (8) et l'extrémité respective (16) de la partie supérieure de palier (5) ainsi que dans la direction verticale de palier Z.

4. Palier selon l'une quelconque des revendications 1 à 3, **caractérisé en ce que** le premier et le deuxième segment de rembourrage (A, B) sont des composants élastiques complètement isolés l'un de l'autre.

5. Palier selon l'une quelconque des revendications 1 à 4, **caractérisé en ce que** le premier et le deuxième segment de rembourrage (A, B) sont configurés de telle sorte que l'élément d'ancrage respectif (9) soit complètement entouré par du matériau élastomère de sorte que la région latérale respective (15) de la butée (13) subisse un tamponnage élastique (18).

6. Palier selon l'une quelconque des revendications 1 à 5, **caractérisé en ce que** l'élément d'ancrage (9) présente à l'intérieur du premier et du deuxième segment de rembourrage (A, B) un siège (19) qui s'étend au-dessus de la butée (13) dans la direction du noyau (7).

7. Palier selon l'une quelconque des revendications 1 à 6, **caractérisé en ce que** dans l'ensemble, deux éléments d'ancrage (9) sont prévus, lesquels sont disposés de manière symétrique par rapport au plan médian transversal C2, et s'étendent en l'occurrence notamment pratiquement sur toute la largeur des segments de rembourrage (A, B), et ce en étant totalement noyés (C) dans du matériau élastomère.

8. Palier selon l'une quelconque des revendications 1 à 7, **caractérisé en ce que** la partie supérieure de palier (5) présente des alésages (20) dans lesquels pénètre le matériau élastomère du premier et du deuxième segment de rembourrage (A, B).

9. Palier selon la revendication 8, **caractérisé en ce que** les alésages (20) sont disposés à l'intérieur de la partie de tête (21) de la partie supérieure de palier (5).

10. Palier selon la revendication 9, **caractérisé en ce que** dans l'ensemble, deux alésages (20) sont prévus, lesquels sont disposés à l'intérieur du plan médian longitudinal C1, et ce de manière symétrique par rapport au plan médian transversal C2.

11. Palier selon l'une quelconque des revendications 1 à 10, **caractérisé en ce que** la butée (13) est une plaque essentiellement rectangulaire.

12. Palier selon l'une quelconque des revendications 1 à 11, **caractérisé en ce que** la butée (13) est vissée au noyau (7), en particulier au moyen de deux à quatre vis (22), le noyau possédant deux à quatre alésages correspondants (23).

13. Palier selon la revendication 12, **caractérisé en ce que** deux vis (22) ou deux alésages (23) sont prévus, lesquels sont disposés symétriquement l'un par rapport à l'autre par rapport au centre du noyau M.

14. Palier selon la revendication 12, **caractérisé en ce que** quatre vis (22) ou alésages (23) sont prévus, lesquels sont disposés symétriquement par rapport au plan médian longitudinal C1 et au plan médian transversal C2.

15. Palier selon l'une quelconque des revendications 1 à 14, **caractérisé en ce que** la région de fond (14) et/ou les deux régions latérales (15) de la butée (13) sont revêtues de matériau élastomère ou de plastique.

16. Palier selon l'une quelconque des revendications 1 à 15, **caractérisé en ce que** toutes les chambres à air (8, 12) dans la région de la butée (13) et du noyau (7) forment un système de chambres complet.

17. Palier selon l'une quelconque des revendications 1 à 16, **caractérisé en ce que** le noyau (7) à l'intérieur du plan médian transversal C2 est connecté à la partie supérieure de palier (5), et ce en créant une connexion (24) au noyau, dont l'épaisseur de paroi est notamment inférieure au diamètre maximal du noyau.

18. Palier selon l'une quelconque des revendications 1 à 17, **caractérisé en ce que** le noyau (7) est structuré, et ce en créant un élargissement (25) de noyau des deux côtés, dans la direction longitudinale de palier X, les segments de rembourrage (A, B) présentant de préférence un renfoncement de rembourrage correspondant (26).

19. Palier selon l'une quelconque des revendications 1 à 18, **caractérisé en ce que** le noyau (7) forme un assemblage d'une seule pièce avec la partie supérieure de palier (5).

20. Palier selon l'une quelconque des revendications 1 à 19, **caractérisé en ce que** la partie inférieure de palier (11) présente, dans la région d'action de la région de fond (14) de la butée (13), un évidement (27) qui augmente la course de ressort du palier dans la direction de pression verticale.

21. Palier selon l'une quelconque des revendications 1 à 20, **caractérisé en ce que** la partie inférieure de palier (11) présente dans la direction longitudinale de palier X une plus grande étendue que dans la direction transversale de palier Y.

22. Palier selon la revendication 21, **caractérisé en ce que** la partie inférieure de palier (11) présente, par rapport aux deux extrémités supérieures de palier (16), un premier et un deuxième rehaussement (28, 29) pour la liaison à la base.

23. Palier selon la revendication 22, **caractérisé en ce qu'**à l'intérieur du premier et du deuxième rehaussement (28, 29), on prévoit à chaque fois un alésage (30, 31) pour le vissage, les deux alésages étant disposés à l'intérieur du plan médian longitudinal C1.

24. Palier selon la revendication 23, **caractérisé en ce que** les deux alésages (30, 31) sont réalisés sous forme de trous oblongs.

25. Palier selon la revendication 24, **caractérisé en ce que** les deux trous oblongs (30, 31) sont réalisés de telle sorte que le premier trou oblong (30) possède une étendue principale orientée dans la direction longitudinale de palier X et que le deuxième trou oblong (31) possède une étendue principale orientée dans la direction transversale de palier Y.

26. Palier selon l'une quelconque des revendications 1 à 25, **caractérisé en ce que** la liaison (6) de la partie supérieure de palier (5) au moteur est pourvue d'un dispositif de mise à niveau (34).

27. Palier selon l'une quelconque des revendications 1 à 26, **caractérisé en ce que** l'élargissement (32) en forme de bride est périphérique.

28. Palier selon l'une quelconque des revendications 1 à 27, **caractérisé en ce que** le côté inférieur de l'élargissement (32) en forme de bride est pourvu d'une couche élastomère (33), la couche élastomère formant, en liaison avec la revendication 3, avec le segment de rembourrage respectif (A, B), un assemblage élastomère complet d'une seule pièce.

29. Palier selon l'une quelconque des revendications 1 à 28. **caractérisé en ce que** le noyau (7) et/ou d'autres surfaces internes sans rembourrage de la partie supérieure de palier (5) est ou sont pourvu(s) d'une couche de matériau élastomère ou de plastique.
